# EUROPÄISCHE PATENTANMELDUNG

(11) **EP 1 455 140 A1**
(43) Veröffentlichungstag der Anmeldung: **08.09.2004**
(21) Anmeldenummer: 03027014.4
(22) Anmeldetag: 22.11.2003
(51) Int. Cl.: F24D 10/00

(54) **Verfahren und Einrichtung zur Reduzierung des Anschlusswertes einer durch Fernwärme gespeisten Hausanschlussstation**

(30) Priorität: 07.03.2003 DE 10311091
(71) Anmelder: MSR-Service für HKS-Anlagen Öl- und Gasbrenner GmbH, 13055 Berlin (DE)
(72) Erfinder: Schramm, Bruno, Dipl.-Ing., 15537 Grünheide (DE); Lang, Jürgen, Dipl.-Ing., 12557 Berlin (DE)
(74) Vertreter: Burghardt, Dieter, Dipl.-Ing.

(57) **Zusammenfassung**

Die Erfindungsaufgabe, ein Verfahren und eine Einrichtung zur Reduzierung des Fernwärmeanschlußwertes einer Hausanschlußstation in der die Trinkwassererwärmung teilweise durch Energieentnahme aus sowohl durch von internen als auch externen Primärenergieträgern beaufschlagten internen Wärmeenergiespeichern erfolgt, zu entwickeln, wurde dadurch gelöst, daß bei einer über einen Zeitabschnitt konstanten Wärmeabnahme für Heizung außerhalb einer maximalen Entnahme von aufgewärmtem Trinkwasser eine Speicherung von entnommener Fernwärme in mindestens einem Primärenergiespeicher erfolgt, dessen Speicherenergie bei einem Spitzenbedarf von aufgewärmtem Trinkwasser zur Beaufschlagung eines Zwischenerwärmers entweder zur weiteren Erwärmung von bereits zuvor in einem Heizungsrücklauf bzw. Fernwärmerücklauf liegenden Vorwärmer aufgewärmtem Trinkwasser eingesetzt wird, wobei anschließend das im Zwischenerwärmer weiter aufgewärmte Trinkwasser in einem im Fernwärmevorlaufkreis liegenden Nachwärmer auf die Abgabetemperatur erwärmt wird oder zur Nacherwärmung des den Vorwärmer beaufschlagenden Heizmediums genutzt wird, wobei der Vorwärmer anschließend mit aufgeheiztem Heizmedium aus dem Heizungsrücklauf beaufschlagt wird.

## Beschreibung

Die Erfindung betrifft ein Verfahren zur Leistunmgreduzierung einer durch Fern- und Nahwärme gespeisten Hausanschlußstation und eine Einrichtung zur Realisierung, mit der eine vorteilhafte Erwärmung von Trinkwasser in einer nach dem Durchflußprizip arbeitenden Warmwasserbereitungsanlage erfolgt.

Mit Hilfe von durch Fernwärme gespeister Hausanschlußstationen werden sowohl Ein- und Mehrfamilienhäuser, Hotels, Bürogebäude, Produktionsstätten, therapeutische Einrichtungen, Sportstätten als auch andere kommunale Einrichtungen mit Wärme für Heizung und Warmwasser versorgt.

Eine Hausanschlußstation für Fernwärme muß so ausgelegt sein, daß der Energiebedarf für Heizung und Warmwasser mit den vom Verbraucher gewünschten Temperaturen zu jeder Zeit abgedeckt werden kann.

Von den Fernwärmelieferanten wird die Temperatur des Fernwärmevorlaufes an die Witterung gleitend angepaßt, um die Verbraucher sowohl bei kalter Witterung ausreichend mit Wärme und Warmwasser zu versorgen als auch in der warmen Jahreszeit mit Warmwasser zu versorgen aber dabei nicht unnötig Fernwärme bereitstellen zu müssen. Hierdurch soll die Fernwärmeversorgung wirtschaftlich gestaltet werden.

Die Temperatur des Fernwärmevorlaufes kann auf 140°C in der kalten Jahreszeit ansteigen. In der wärmeren Jahreszeit erreicht sie 80°C und könnte weit darunter liegen, wenn nicht für die Warmwasserbereitung Wärme im Vorlauf mit einer Temperatur von mindestens 65°C bereitgestellt werden müßte.

Auch der tägliche Bedarf an Fernwärme weist starke Schwankungen auf, vor allem durch den Spitzenbedarf in den Morgenstunden, wenn die Gebäude nach der nächtlichen Phase des abgesenkten Heizbetriebs wieder aufgeheizt werden und gleichzeitig ein erhöhter Warmwasserverbrauch vorwiegend für die Körperpflege benötigt wird.

Obwohl der erhöhte Wärmebedarf für die Warmwasserbereitung nur kurzzeitig auftritt, erhöhte sich die erforderliche Fernwärmeleistung erheblich, wenn der Bedarf für Heizung und Warmwasserbereitung gleichzeitig auftritt. Für diese höhere Fernwärmeleistung sind im Fernwärmenetz größere Rohrleitungsquerschnitte zu verlegen und stärkere Pumpen zu installieren.

Zur Senkung der Bereitstellungskosten für die Ferwärmeversorgung als auch der Anlagenkosten muß der Gleichzeitigkeitsfaktor für den Wärmeverbrauch verändert werden. Um die Verbraucher zur Änderung des Gleichzeitigkeitsfaktors bei der Wärmentnahme zu zwingen und daran zu interessieren, ihren maximalen Fernwärmeverbrauch zu drosseln, bzw. die Wärmeentnahme einem gleichmäßigeren Durchschnittsverbrauch anzupassen, erheben die Fernwärmelieferanten neben den Kosten für den Fernwärmeverbrauch als fixe Kosten einen Zuschlag in Abhängigkeit von der Anschlußleistung der Hausanschlußstation, die sogenannten Anschlußwertkosten.

Um die Anschlußleistung für Hausanschlußstation reduzieren zu können, wurden die Hausanschlußstationen mit Trinkwasserspeichern versehen, aus denen ein Teil oder der gesamte Warmwasserbedarf während der Spitzenbedarfszeiten abgedeckt wird. Die Speicherladung erfolgt diskontinuierlich und auch während der Spitzenlastzeiten. Somit ist nur eine nicht definierte Senkung des Anschlußwertes gegeben. Begrenzt wird die Energiespeicherung durch die obere Grenztemperatur von 60° C und durch das maximale Speichervolumen. Diese Lösung bleibt nur eine theoretische, da die Speicherung von erwärmtem Trinkwasser die Gefahr beinhaltet, daß sich die im Trinkwasser enthaltenen Legionellen vermehren, was vor allem dann eintritt, wenn über eine längere Zeitspanne kein oder sehr wenig Wasser entnommen wird. Bekanntlich vermehren sich die im Trinkwasser vorhandenen Legionellen zwischen 35° und 45° C besonders im stehenden Wasser sprunghaft. Legionellen befallenes Trinkwasser kann zu ernsthaften Gesundheitsschäden führen. Außerdem gilt seit 01.01.2003 eine neue Trinkwasserverordnung mit höheren Auflagen bezüglich Infektionsschutz (Legionellenbefall) als bisher. Diese zwingt Betreiber von Wasserversorgungsanlagen zu einer größeren Sorgfalt.

Bei Hausanschlußstationen für Fernwärme zur Heizung und Warmwasserbereitung können prinzipiell Anteile vom Fernwärmevorlauf, vom Fernwärmerücklauf, vom Heizungsrücklauf oder vom Warmwasser gespeichert werden, um in einer Spitzenbedarfszeit neben der Anschlußleistung eine Reserve zur Abdeckung eines kurzzeitigen Spitzenbedarfs zur Verfügung zu haben. Bei Warmwasserspeichern werden Speicher-Lade-Systeme und Durchflußsysteme unterschieden.

Es sind Warmwasserbereitungsanlagen nach dem Durchflußprinzip bekannt.

Grundlegendes Prinzip dieser bekannten Anlagen ist, daß ein Wärmeübertrager auf einer Seite vom Trinkwasser je nach Bedarf durchströmt und auf der anderen Seite von einem Heizmedium (Heizwasser oder Fernwärme) durchflossen wird. Die Menge und Temperatur des Heizmediums wird durch Regeleinrichtungen dem jeweiligen Bedarf angepaßt, so daß das Warmwasser auch bei wechselnden Durchsätzen stets die gleiche Temperatur besitzt.

Eine zweistufige Warmwasserbereitung nach dem Durchflußprinzip ist in DD 204987 beschrieben. Dieses Prinzip kommt in Fernwärme-Hausanschlußstationen zur Anwendung. Die Warmwasserbereitungsanlage besteht aus einem Vorwärmer und einem Nachwärmer. Das aus dem Heizkreis-Rücklauf abströmende Medium durchströmt bevor es als Fernwärme-Rücklauf die Station verläßt durch einen Wärmeübertrager, der als Vorwärmer bezeichnet wird. Dieser Wärmeübertrager wird auf der anderen Seite vom kalten Trinkwasser durchströmt. Je nach Heizungsrücklauftemperatur und Warmwasseranfall wird dieses Trinkwasser ungeregelt vorgewärmt. Danach durchströmt das Trinkwasser den Nachwärmer, wo es über normale Regelkreise mittels Fernwärme auf Soll-Temperatur gebracht wird. Diese Schaltung hat den Vorteil, daß zur Trinkwassererwärmung weniger Fernwärme-Vorlaufmedium benötigt wird, was die Anschlußleistung der Station senkt, trägt aber nicht zur Minderung von benötigter Heizleistung in Spitzenbelastungszeiten bei.

In DE 19504730 ist dieses Prinzip ebenfalls beschrieben, allerdings mit einer neuen Art einer Spitzenspeichererwärmung. In DE 4404856 kann man dieses Prinzip auch erkennen.

Weiterhin wurde für eine nach diesem Prinzip arbeitende Warmwasserbereitungsanlage vorgeschlagen, daß der Heizungsstrom auf dem Weg zum Vorwärmer durch eine Heizwassereinspritzung temperatur- und volumenstromseitig bedarfsgerecht erhöht wird, was zu einer weiteren Verringerung der Fernwärme-Anschlußleistung führt,

Ziel der Erfindung ist den durch einen diskontinuierlichen Wärmeenergieverbrauch ungünstigen Gleichzeitigkeitsfaktor in der durch Fernwärme gespeisten Hausanschlußstation durch Maßnahmen zur Speicherung von Fernwärmeenergie außerhalb von einer Spitzenbelastung innerhalb der Hausanschlußstation so umzuwandeln, daß sich eine annähernd in Grenzen konstante, die Anschlußwerte des Fernheiznetzes betimmende Energieentnahme ergibt.

Der Erfindung liegt die Aufgabe zugrunde, ein Verfahren zur Reduzierung des Anschlußwertes einer durch Fernwärme gespeisten Hausanschlußstation und eine Einrichtung zur Verwirklichung des Verfahrens, in der die Trinkwassererwärmung teilweise durch Energieentnahme aus sowohl durch von internen als auch externen Primärenergieträgern beaufschlagten internen Wärmeenergiespeichern erfolgt, zu entwickeln.

Diese Aufgabe wird erfindungsgemäß durch die in den unabhängigen Ansprüchen offenbarte technische Lehre gelöst, wobei mindestens drei Wärmeübertrager so geschaltet werden, daß durch Energiequellen verschiedener Herkunft und Temperaturniveaus Trinkwasser oder andere Wärmeübertragungsmedien bedarfsgerecht auf Soll-Temperatur erwärmt werden.

Die Erfindung wird nachfolgend an einem Ausführungsbeispiel näher erläutert. In den zugehörigen Zeichnung zeigen:
- Fig. 1: einen Anlagenaufbau mit einer Schaltungsanordnung von Wärmeübertragern in einer Einrichtung zur Trinkwassererwärmung bei Einsatz eines intern gespeisten Wärmeenergiespeichers,
- Fig. 2: einen Anlagenaufbau mit einer Schaltungsanordnung von Wärmeübertragern in einer Einrichtung zur Trinkwassererwärmung bei Einsatz von zwei intern gespeisten Wärmeenergiespeichern,
- Fig. 3: einen Anlagenaufbau mit einer Schaltungsanordnung von Wärmeübertragern in einer Einrichtung zur Trinkwassererwärmung bei Einsatz von einem extern über eine Solaranlage gespeisten Wärmenergiespeicher,
- Fig. 4: eine Ausführungsvariante der erfinderischen Basislösung nach Fig. 1 mit einer Schaltungsanordnung von Wärmeübertragern in einer Einrichtung zur Trinkwassererwärmung bei Einsatz von zwei Wärmeenergiespeichern, wobei einer intern und einer über die Ausnutzung der im Abwasser oder Kühlwasser enthaltenen Energie extern gespeist wird.

Eine Hausanschlußstation 1 ist mit einem Fernwärmevorlauf 2 und einem Fernwärmerücklauf 3 verbunden. Diese Hausanschlußstation 1 weist eien Heizungsvorlauf 4 und einen Heizungsrücklauf 5 auf. Weiterhin verfügt die Hausanschlußstation 1 über einen Vorlaufanschluß 6 zum Fernwärmevorlauf 2 und einen Rücklaufanschluß 7.1 und 7.2 zum Fernwärmerücklauf 3 für eine Trinkwasser aufbereitende Warmwasserbereitungsanlage.

Diese Warmwasserbereitungsanlage der Hausanschlußstation 1 besteht aus einem als Nachwärmer 8 ausgebildeten, mit dem Vorlaufanschluß 6 verbundenen Wärmeübertrager, der ein vorgewärmtes, über eine Warmwasserzwischenleitung 9.1 nicht dargestelltes Trinkwasser aus einem Kaltwasseranschluß 10 auf Solltemperatur für eine Warmwasserzuführung 11 bringt. Die Temperatur des im Nachwärmer 8 erwärmten Trinkwassers wird mittels einer Regler 12 auf Solltemperatur begrenzt.

In einem als Vorwärmer 13 ausgebildeten, mit dem Heizmedium aus dem Fernwärmerücklauf 3 über eine Verbindungsleitung 7.2 beaufschlagten Wärmeübertrager, wird das kalte aus dem Kaltwasseranschluß 10 entnommene Trinkwasser in Abhängigkeit von der Temperatur des Fernwärmerücklaufes 7 auf ein entsprechendes Temperaturniveau angehoben.

Reicht die momentane Leistung des Vorwärmers 13 wegen einer zu niedrigen Temperatur des Heizmediums aus dem Fernwärmerücklauf 3 nicht aus, kann die Temperatur des Heizmediums aus dem Fernwärmerücklauf 3 vor Eintritt in den Vorwärmer 13 durch den als Zwischenerwärmer 14 dienenden Wärmeübertrager thermisch angehoben werden. Die Wärmeversorgung des als Zwischenerwärmer 14 dienenden Wärmeübertragers kann aus einem separaten, internen oder externen Energiespeicher 15 erfolgen. Der Volumenstrom im Fernwärmerücklauf 3 bleibt dabei unverändert, was für die hydraulische Auslegung der Anlage günstig ist. Eine Pumpe 16 sichert die Zirkulation des Heizmediums zum Zwischenspeicher 15.

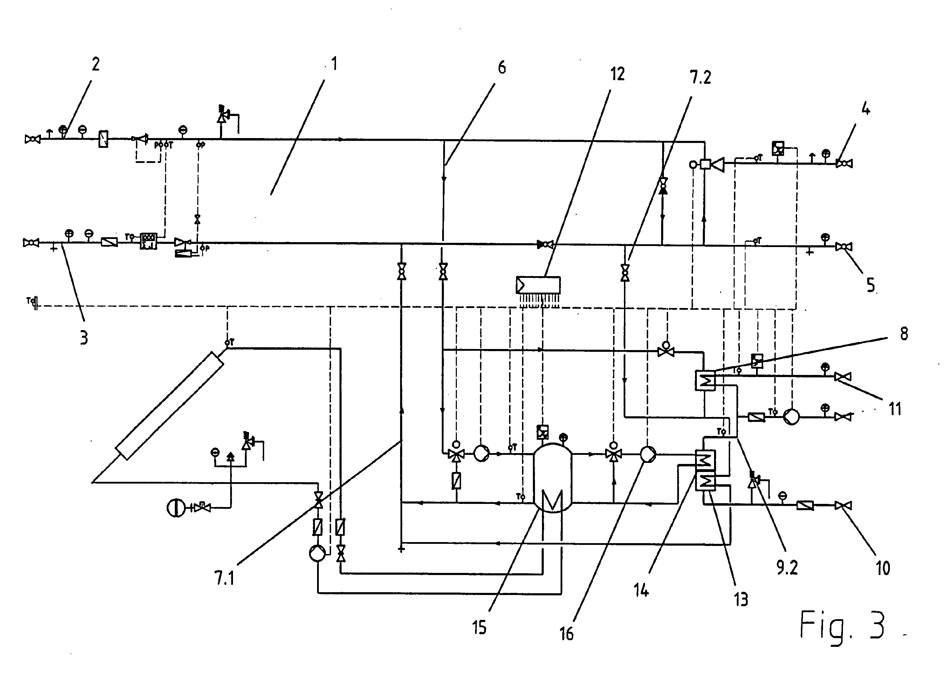

Fig. 3 zeigt eine Schaltung, wo anstelle des Heizmediums aus dem Fernwärmerücklauf 3 das Trink-Warmwasser nach Passieren des Vorwärmers 13 über eine separate Energiequelle eines Energiespeichers, der durch intern und/oder extern verfügbare Energieträger aufgeladen werden kann, weiter thermisch angehoben wird. Diese Schaltung ist interessant, wenn Energie im Heizmedium aus dem Fernwärmerücklauf 3 saisonal nur unwesentlich vorhanden ist (z.B. in der Sommerzeit) andererseits aber eine andere Energiequelle, beispielsweise eine Solaranlage sich für eine Nutzung anbietet.

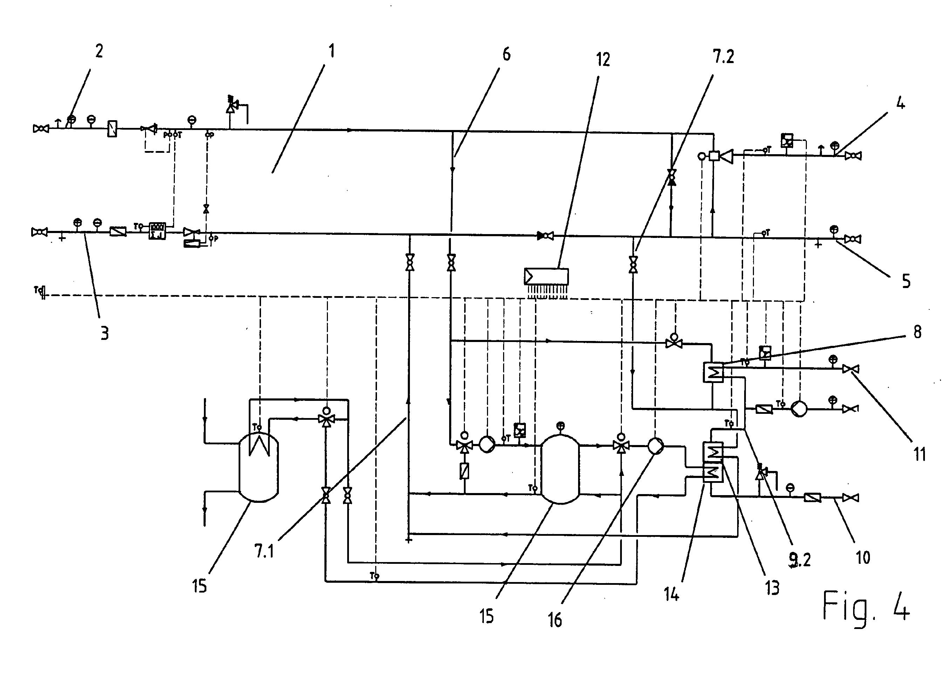

In Fig. 4 wird eine Schaltung gezeigt, wo aufgrund des geringen thermischen Niveaus einer separaten Wärmequelle (z.B. Abwasser, Abluft) ein Wärmeübertrager als Zwischenerwärmer 14 dem eigentlichen Vorwärmer 13 vorgeschaltet ist. So kann auch in diesem Fall das Trinkwasser über drei Aufwärmstufen auf Solltemperatur gebracht werden.

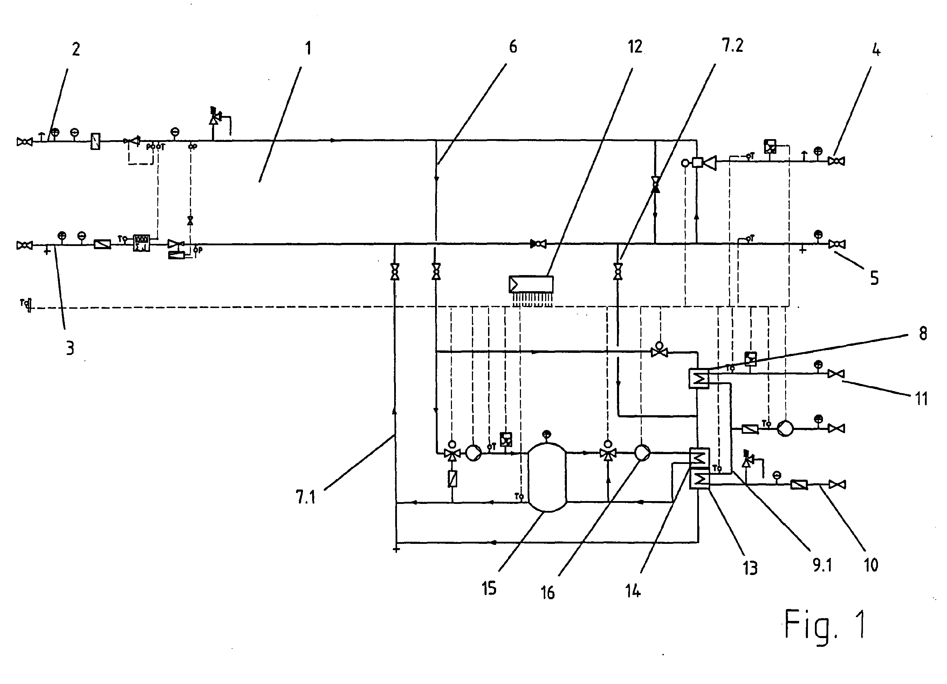

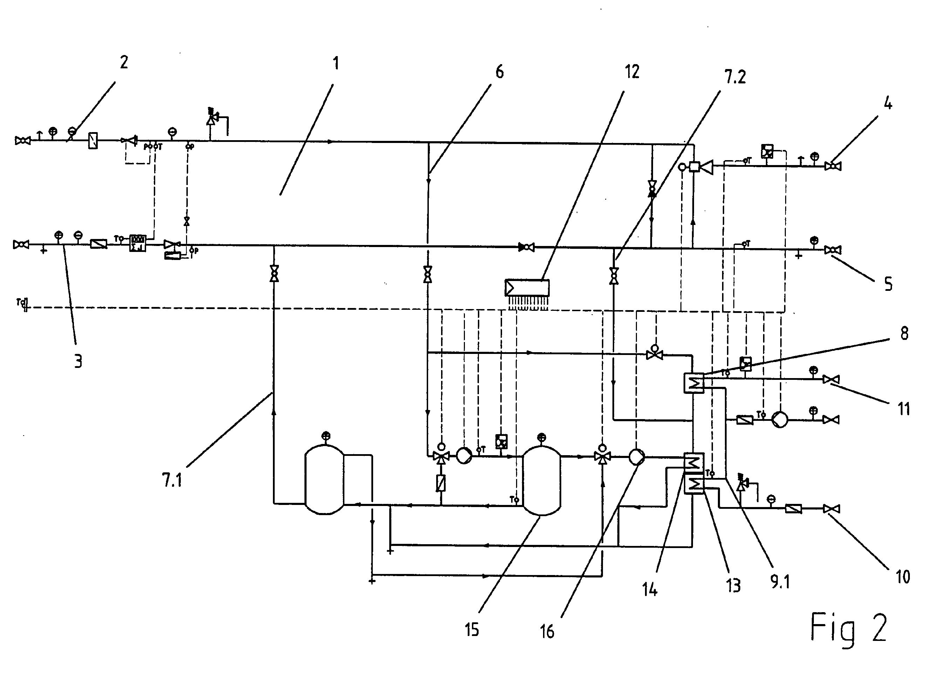

Der Vorteil dieser Kombination von Wärmeübertragern ist es, daß diese Baueinheit vorgefertigt werden kann (z.B. auf Gestell), und nur geringe Änderungen an den Anschlüssen notwendig sind, um alle in Fig. 1-3 genannten Schaltungsvarianten realisieren zu können.

Insbesondere in Verbindung mit einer Kombination von Primärenergiespeichern wird es ermöglicht, daß regenerative Energiequellen (Solar,Abwärmen) nicht nur zur Energieeinsparung beitragen, sondern auch zur Senkung der Anschlußleistung der Fernwärmestation.

Das erhöht die Akzeptanz zur Nutzung dieser Energiequellen wesentlich und stellt somit einen wichtigen Beitrag zum Schutz unserer Umwelt dar.

Mit der erfindungsgemäß ausgestalteten Hausanschlußstation wird erreicht, daß der Anschlußwert am Fernheiznetz gesenkt werden kann.

### Bezugszeichen-Aufstellung

- 1: Hausanschlußstation
- 2: Fernwärmevorlauf
- 3: Fernwärmerücklauf
- 4: Heizungsvorlauf
- 5: Heizungsrücklauf
- 6: Vorlaufanschluß
- 7.1: Rücklaufanschluß
- 7.2: Verbindungsleitung
- 8: Nachwärmer
- 9.1: Warmwasserverbindungsleitung
- 9.2: Warmwasserverbindungsleitung
- 10: Kaltwasserleitung
- 11: Warmwasserzuführung
- 12: Regler
- 13: Vorwärmer
- 14: Zwischenerwärmer
- 15: Primärenergiespeicher
- 16: Pumpe

## Patentansprüche

1. Verfahren zur Reduzierung des Anschlußwertes eines durch Fernwärme gespeisten Hausanschlusses durch Homogenisierung des durch Verbrauch von Wärmeenergie für Heizung und Trinkwassererwärmung bestimmten Gleichzeitigkeitsfaktors, ***dadurch gekennzeichnet,* daß** bei einer über einen definierten Zeitabschnitt nahezu konstanten Wärmeabnahme für Heizung außerhalb von einer maximalen Entnahme von aufgewärmtem Trinkwasser eine Speicherung von entnommener Fernwärme in mindestens einem Primärenergiespeicher (15) erfolgt, dessen Speicherenergie bei einem Spitzenbedarf von aufgewärmtem Trinkwasser zur Beaufschlagung eines Zwischenerwärmers (14) entweder zur weiteren Erwärmung von bereits zuvor in einem Heizungsrücklauf (5) bzw. Fernwärmerücklauf (3) liegenden Vorwärmer (13) aufgewärmtem Trinkwasser eingesetzt wird, wobei anschließend das im Zwischenerwärmer (14) weiter aufgewärmte Trinkwasser in einem im Kreis des Fernwärmevorlaufes (3) liegenden Nachwärmer (8) auf die Abgabetemperatur erwärmt wird oder zur Nacherwärmung des den Vorwärmer (13) beaufschlagenden Heizmediums genutzt wird, wobei der Vorwärmer (13) anschließend mit aufgeheiztem Heizmedium aus dem Heizungsrücklauf (5) beaufschlagt wird.

2. Verfahren nach Anspruch 1, ***dadurch gekennzeichnet,* daß** der/die Primärenergiespeicher (15) durch außerhalb der Hausanschlußstation (1) nutzbare verfügbare Energieträger beaufschlagt werden.

3. Verfahren nach Anspruch 1 und 2, ***dadurch gekennzeichnet,* dass** die Ladung de/der Primärenergiespeicher (15) während der Schwachlastzeiten geregelt oder gesteuert erfolgt.

4. Hausanschlußstation, die aus einem Fernwärmenetz gespeist wird, mit einem direkten Fernwärmeanschluß oder mit einer indirekten Wärmeübertragung der Wärmeenergie über Wärmeübertrager auf das Heizmedium eines Heizkreislaufes für die Raumbeheizung und zur Warmwasserbereitstellung zur Durchführung des Verfahrens nach Anspruch 1 bis 3, ***dadurch gekennzeichnet,* daß** zur Warmwasserbereitstellung eine mehrstufige, nach dem Durchflußprinzip arbeitende Warmwasserbereitungsanlage vorgesehen ist, die aus mehreren Wärmeübertragern, besteht.

5. Hausanschlußstation nach Anspruch 4, ***dadurch gekennzeichnet,* daß** die Warmwasserbereitungsanlage aus mindestens drei in einer Kombination aus Reihen- und Parallelschaltung geschalteten Wärmeübertragern (8, 13, 14) besteht und je ein Wärmeübertrager als Vorwärmer (13), als Nachwärmer (8) und als das Heizmedium zwischen Nachwärmer (8) und Vorwärmer (13) erwärmender Zwischenerwärmer (14) vorgesehen ist.

6. Hausanschlußstation nach Anspruch 4, ***dadurch gekennzeichnet,* daß** die Warmwasserbereitungsanlage aus mindestens drei in einer Kombination aus Reihen- und Parallelschaltung geschalteten Wärmeübertragern (8, 13, 14) besteht und je ein Wärmeübertrager als Vorwärmer (13), als Nachwärmer (8) und als das vorgewärmte Trinkwasser zwischen Nachwärmer (8) und Vorwärmer (13) erwärmender Zwischenerwärmer (14) vorgesehen ist.

7. Hausanschlußstation nach Anspruch 5, ***dadurch gekennzeichnet,* daß** der Zwischenerwärmer (14) mit dem Vorlauf des vom Primärenergiespeicher (15) aufgeheizten Heizmediums verbunden ist.

8. Hausanschlußstation nach Anspruch 6 und 7, ***dadurch gekennzeichnet,* daß** der Zwischenerwärmer (14) dem Vorwärmer (13) kaltwasserseitig nachgeschaltet ist.

9. Hausanschlußstation nach Anspruch 1 bis 5, ***dadurch gekennzeichnet*, daß** der Vorwärmer (13), der Nachwärmer (8) und der Zwischenerwärmer (14) der mehrstufigen Warmwasserbereitungsanlage auf einem Gestell montiert und durch Austausch vorgefertigter Rohrelemente eine Änderung der Schaltungsvarianten ermöglichend zu einander angeordnet sind.
